# EUROPEAN PATENT APPLICATION

(11) **EP 2 596 700 A2**
(43) Date of publication of application: **29.05.2013**
(21) Application number: 12194272.6
(22) Date of filing: 26.11.2012
(51) Int. Cl.: A01K 11/00

(54) **Animal identification device**

(30) Priority: 28.11.2011 GB 201120427
(71) Applicant: Shearwell Data Limited, Minehead, Somerset TA24 7AS (GB)
(72) Inventor: Webber, Richard, Minehead, Somerset TA24 7AS (GB)
(74) Representative: Johnson, Richard Alan

(57) **Abstract**

An animal identification device (10) comprising: a metal ear tag (12) having a first part comprising a frame and a first mating portion (16) and a second part comprising a second mating portion (18); and a transponder housing (14) retained within the frame, wherein the first and second mating portions are locatable on opposite sides of an animal's ear and engageable to connect the first and second parts. With this arrangement, the metal part of the ear tag is outermost, which can increase the durability of the ear tag, e.g. to allow it to be worn throughout the lifetime of the animal.

## Description

### FIELD OF THE INVENTION

The invention relates to devices for animal identification, and in particular to ear tags which carry electronic transponders, e.g. passive radiofrequency identification (RFID) circuitry.

### BACKGROUND TO THE INVENTION

Identifying animals using an ear tag is well known. A typical ear tag has first and second parts which can be opposed on opposite sides of the animal's ear. Usually a sharp male part with a barbed tip is pushed through the animal's ear into a female part in which its tip is irreversibly trapped, so that the tag cannot thereafter be removed. The male and female parts may be separate, but it is common to provide them at opposite ends of a single element (e.g. strip of metal) which folds around the edge of the ear in a loop, making unauthorised removal of the device more difficult.

As the use of electronic identification systems has become the norm for livestock management, there have been a number of proposals for incorporating electronic transponders into ear tags. For example, WO 91/10982 and WO 95/04455 disclose an ear tag in which the transponder sits in an axial cavity of the spike on the male portion. EP 1 084 614 describes a discrete transponder housing with a small loop for attaching to a separate (e.g. conventional) tag. US 4,718,697 shows the transponder sandwiched between sheets defining two capsule halves which are welded together. Other documents describe flat annular transponder modules. EP 0 754 406 has a transponder in the form of a washer which fits around the male spike of a tag. WO 99/45760 shows a female component in the form of a disc with the transponder potted or encapsulated adjacent its rim. US 5,588,234 shows a conical tag body, either male or female, with the transponder coil extending around the base of the cone which has a central bore or spike for engagement with the other component. GB 2 392 138 discloses an ear tag in which a transponder is housed in a cavity formed adjacent the female part, where the cavity is closed to trap the transponder when the male part mates with the female part.

Often electronic transponders are incorporated in plastic ear tags. However, in some cases it may be desirable to use metal ear tags, e.g. for improved durability. US 7,533,482 discloses a metal ear clip with a plastic housing formed around one end thereof. The plastic housing encases an electronic transponder and includes a void which provides access for the other end of the clip in order to allow the clip to be closed.

### SUMMARY OF THE INVENTION

At its most general, the present invention proposes incorporating the electronic transponder in a housing that is retained within a frame provided by a metal ear tag. With this arrangement, the metal part of the ear tag is outermost, which increases the durability of the ear tag, e.g. to allow it to be worn throughout the lifetime of the animal.

According to one aspect of the invention there may be provided an animal identification device comprising: a metal ear tag having a first part comprising a frame and a first mating portion and a second part comprising a second mating portion; and a transponder housing retained within the frame, wherein the first and second mating portions are locatable on opposite sides of an animal's ear and engageable to connect the first and second parts. Retaining the transponder housing within the frame, i.e. such that the transponder housing does not project beyond the metal ear tag across the device, may provide improved durability for the device.

The metal ear tag may comprise a strip of metal. In this arrangement, the frame may define an aperture through the strip of metal within which the transponder housing is retained. The frame may effectively provide a protective shell around the periphery of the transponder housing. In particular, the width of the strip of metal may be greater than or equal to the width of the transponder housing so that the frame can provide protection for the side edges of the transponder housing, which may be more susceptible to wear and tear than other parts of the device.

The first mating portion may be located along the strip of metal away from the aperture. In other words, the transponder housing may be separate from the first mating portion. This may represent an improvement over known devices (such as US 7,533,482) in which the transponder housing and/or mating portions have to be adapted to enable the ear tag to be attached.

The strip of metal may be folded to form first and second legs, which correspond to the first and second parts respectively. When the transponder housing is retained in the frame, the animal identification device may therefore comprise a robust single piece before attachment to an animal.

The transponder housing may be retained in the frame by an interference fit. For example, the frame may be sized slightly smaller than the transponder housing, which in turn may be made from a material (e.g. plastic, such as solid nylon) that exhibits a degree of resilient deformation. Alternatively or additionally, the strip of metal may include a plurality of projections at the aperture for securing the transponder housing by crimping. After crimping, the projections may lie over the side edges of the transponder housing to provide further protection.

The first and second mating portions may be conventional. For example, they may comprise a male part having a pointed tip and a female part for receiving the pointed tip. The female part may include a shaped region for deflecting the pointed tip in a manner that deforms the male part to create a permanent engagement, i.e. impossible to reverse without damaging the connection. The shaped region may resemble a bowl.

The female part, e.g. a bowl-shaped depression with a retaining bar, is located on the first part separately from the transponder housing, e.g. at the end of the first leg of the metal ear tag.

The transponder housing encases an radio frequency identification (RFID) chip. The RFID chip may be conventional. The RFID chip may be permanently encased, i.e. the transponder housing may be moulded (e.g. injection moulded) around it. Alternatively, the transponder housing may have a cavity for receiving the RFID chip.

In another aspect the invention may provide a kit of parts for assembling an animal identification device, the kit comprising: a metal ear tag having a first part comprising a frame and a first mating portion and a second part comprising a second mating portion; and a transponder housing for retaining within the frame, wherein the first and second mating portions are locatable on opposite sides of an animal's ear and engageable to connect the first and second parts. The kit can be assembled before attaching the device to an animal.

In yet another aspect, the invention may provides a metal ear tag for an animal identification device, the ear tag having: a first part comprising a frame for retaining a transponder housing and a first mating portion, and a second part comprising a second mating portion wherein the first and second mating portions are locatable on opposite sides of an animal's ear and engageable to connect the first and second parts. As described above, the metal ear tag preferably comprises a strip of metal folded to form first and second legs, which correspond to the first and second parts respectively, wherein the frame defines an aperture through the strip of metal, and wherein the first mating portion is located along the strip of metal away from the aperture.

### BRIEF DESCRIPTION OF THE DRAWINGS

Examples of the invention are described in detail below with reference to the accompanying drawings, in which:
Fig. 1A is a perspective view of an animal identification device that is a first embodiment of the invention;
Fig. 1B is a side view of the animal identification device shown in Fig. 1A;
Fig. 1C is a front view of the animal identification device shown in Fig. 1A;
Fig. 2A is a perspective view of an animal identification device that is a second embodiment of the invention;
Fig. 2B is a side view of the animal identification device shown in Fig. 2A; and
Fig. 2C is a front view of the animal identification device shown in Fig. 2A.

### DETAILED DESCRIPTION; FURTHER OPTIONS AND PREFERENCES

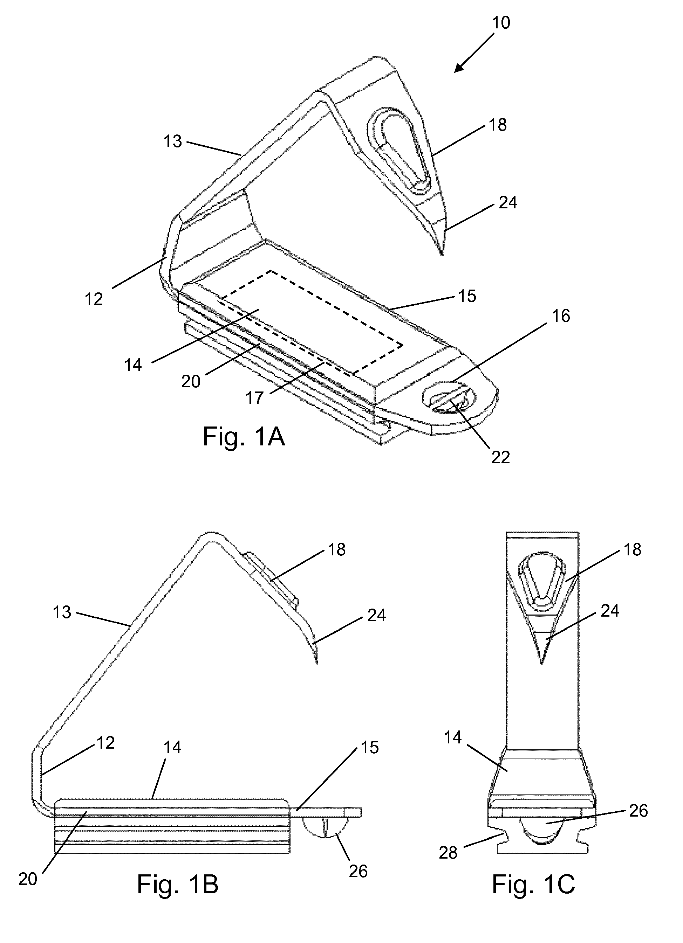

Figs. 1A, 1B and 1C show an animal identification device 10 that is a first embodiment of the invention. The animal identification device 10 comprises an ear tag 12, formed from a strip of metal, and a transponder housing 14, formed from a plastic material such as solid nylon, mounted on the ear tag 12.

The strip of metal forming the ear tag 12 is folded at a number of locations along its length. At a first end of the strip of metal, a female mating portion 16 is formed. In this embodiment, the female mating portion 16 comprises a hemispherical "bubble" depression 26 (seen in Figs. 1B and 1C) that is stamped into the strip of metal and a locking bar 22 which spans across the mouth of the depression 26. At a second end of the strip of metal, opposite to the first end, a male mating portion 18 is formed. In the male mating portion 18, the strip of metal tapers to a sharp terminal point 24.

The strip of metal is folded around its midpoint to form two legs 13, 15, which extend away from the folded region. The female mating portion 16 is located at the end of first leg 15 distal from the folded region. The male mating portion 18 is on the end of second leg 13 distal to the folded region. The end of the second leg 13 is folded downwards so that the male mating portion 18 is orientated substantially perpendicular to the second leg 13. The folded region in the strip of metal that defines the first and second legs 13, 15 causes the female mating portion 16 and the male mating portion 18 to become opposed to one another, with a gap in between into which an animal's ear can be inserted.

In use, after the animal's ear is inserted, the two legs 13, 15 can be brought together e.g. using a suitable clamp, whereby the pointed end 24 of the male mating portion 18 is received in the depression 26 and defected thereby to clamp around the locking bar 22. A permanent connection between the male and female mating portions is thereby created.

In the embodiment shown in Figs. 1A, 1B and 1C, the width of the first leg 15 is greater than the second leg 13. The folded region includes a section that gradually increases in width, but in other embodiments this change in width may be a step change.

In its widened part, the first leg 15 has a centrally located aperture 17 (shown in dotted lines in Fig. 1A) running along its length. The first leg 15 therefore provides an open rectangular frame.

The transponder housing 14 is mounted within the frame of the first leg 15. The transponder housing 14 is a substantially cuboidal element having an indented channel (not shown) around its side surfaces for receiving the inside edges of the aperture 17. The cross-sectional area of the transponder housing 14 at the indented channel may be slightly greater than the area of the aperture 17 so that the transponder housing is retained in the frame by an interference fit.

Parts of the transponder housing project above and below the first leg 15. However, the width of the transponder housing 14 is less than or equal to the width of the first leg 15 so that the transponder housing 14 does not project outwardly (widthways) further than the metal ear tag. In this way, the side surfaces of the transponder housing 14 are protected from wear. The side edges 20 of the metal ear tag 12 are exposed along the length of the transponder housing 14.

The transponder housing 14 is made of a material that exhibits resilience, which enables it to be mounted in the frame by pushing it through the aperture 17.

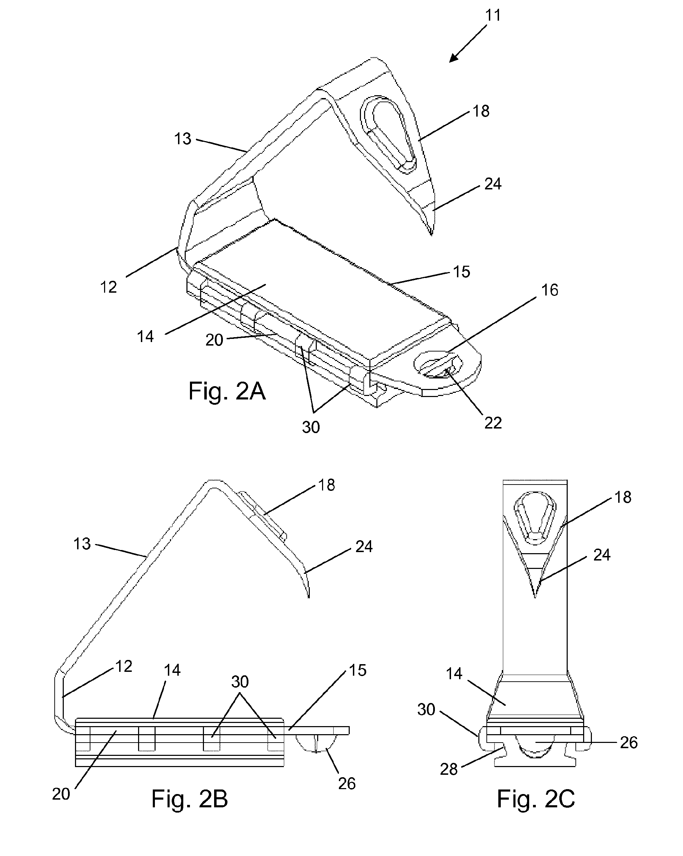

Figs. 2A, 2B and 2C show an animal identification device 11 that is a second embodiment of the invention. Features in common with the device shown in Figs. 1A, 1B and 1C are given the same reference numbers and are not described again.

The second embodiment differs from the first embodiment in that the transponder housing 14 is secured to the metal ear tag 12 by a crimped connection. The first leg 15 of the ear tag 12 has a number of projections extending outwardly from its side surfaces 20. After the transponder housing 14 is mounted in the aperture (not shown in Figs. 2A, 2B and 2C), a crimping tool is used to deform the projections to insert them into a pair of channels 28 running along the side surfaces of the transponder housing, whereby they grip the transponder housing 14 against the first leg 15.

## Claims

1. An animal identification device comprising:
a metal ear tag having a first part comprising a frame and a first mating portion and a second part comprising a second mating portion; and
a transponder housing retained within the frame,
wherein the first and second mating portions are locatable on opposite sides of an animal's ear and engageable to connect the first and second parts.

2. An animal identification device according to claim 1, wherein the metal ear tag comprises a strip of metal and the frame defines an aperture through the strip of metal within which the transponder housing is retained.

3. An animal identification device according to claim 2, wherein the first mating portion is located along the strip of metal away from the aperture.

4. An animal identification device according to claim 2 or 3, wherein the strip of metal is folded to form first and second legs, which correspond to the first and second parts respectively.

5. An animal identification device according to any one of claims 2 to 4, wherein the width of the strip of metal is greater than or equal to the width of the transponder housing.

6. An animal identification device according to claim 5, wherein the strip of metal includes a plurality of projections at the aperture for securing the transponder housing by crimping.

7. An animal identification device according to any preceding claim, wherein the first and second mating portions comprise a male part having a pointed tip and a female part for receiving the pointed tip.

8. An animal identification device according to claim 7, wherein the female part is located on the first part separately from the transponder housing.

9. An animal identification device according to any preceding claim, wherein the frame is sized to retain the transponder housing by an interference fit.

10. An animal identification device according to any preceding claim, wherein the transponder housing is made of plastic.

11. An animal identification device according to any preceding claim, wherein the transponder housing encases an radio frequency identification (RFID) chip.

12. A kit of parts for assembling an animal identification device, the kit comprising:
a metal ear tag having a first part comprising a frame and a first mating portion and a second part comprising a second mating portion; and
a transponder housing for retaining within the frame,
wherein the first and second mating portions are locatable on opposite sides of an animal's ear and engageable to connect the first and second parts.

13. A metal ear tag for an animal identification device, the ear tag having:
a first part comprising a frame for retaining a transponder housing and a first mating portion, and
a second part comprising a second mating portion
wherein the first and second mating portions are locatable on opposite sides of an animal's ear and engageable to connect the first and second parts.

14. A metal ear tag according to claim 13 comprising a strip of metal folded to form first and second legs, which correspond to the first and second parts respectively,
wherein the frame defines an aperture through the strip of metal, and
wherein the first mating portion is located along the strip of metal away from the aperture.
